# EUROPÄISCHE PATENTSCHRIFT

(11) **EP 1 900 585 B1**
(45) Veröffentlichungstag und Bekanntmachung des Hinweises auf die Patenterteilung: **24.04.2013**
(21) Anmeldenummer: 07450154.5
(22) Anmeldetag: 10.09.2007
(51) Int. Cl.: B60T 17/22

(54) **Vorrichtung zum Prüfen von pneumatisch betätigbaren Bremsen**
Device for testing pneumatically operated brakes
Dispositif de vérification de freins pouvant être actionnés de manière pneumatique

(30) Priorität: 12.09.2006 AT 15182006
(43) Veröffentlichungstag der Anmeldung: 19.03.2008
(73) Patentinhaber: ÖBB - Technische Services GmbH, 1110 Wien (AT)
(72) Erfinder: Holzner, Karl, 2100 Leobendorf (AT); Kreuzinger, Josef, 3463 Eggendorf am Wagram (AT)
(74) Vertreter: Itze, Peter

(56) Entgegenhaltungen:
- EP-A2- 1 103 437
- US-A- 4 440 015
- US-A- 4 847 770

## Beschreibung

Die Erfindung hat eine Vorrichtung zum Prüfen von pneumatisch mit einem Druckmedium betätigbaren Bremsen, die in schienengeleiteten Fahrzeugen angeordnet sind, zum Gegenstand.

Schienengeleitete Fahrzeuge, wie Eisenbahnwagen, sei es Personenwagen oder Güterwagen, Wagen von Schnellbahnen, U-Bahnen u. dgl., weisen druckluftbetätigbare Bremsen auf. Es ist hierbei für jedes Rad in der Regel eine eigene Bremse vorgesehen, wobei dieselben über eine Hauptleitung mit einer Druckluftquelle, z. B. Pumpe, und einem Druckluftbehälter verbunden sind. Bei einem Bremsvorgang wird ein Ventil geöffnet, so dass die Bremsen druckluftbeaufschlagt sind, und der Bremsvorgang eingeleitet werden kann. Soll der Bremsvorgang beendet werden, wird die Verbindung zur Hauptleitung unterbrochen und die Bremse gelüftet. Sinkt jedoch der Druck in der Hauptleitung, z. B. durch Undichtigkeiten, unter einen bestimmten Wert, z. B. 4,9 bar, so wird von einem Druckbehälter, der in jedem einzelnen Fahrzeug angeordnet ist, eine Druckbeaufschlagung der Bremsen durchgeführt. Es liegt ein vorsorglicher Bremsvorgang vor.

In der gattungsbildenden EP 1 103 437 A2 wird eine Bremsprobeanlage und ein Verfahren zur Überprüfung der Funktion von Bremsen in Schienenfahrzeugen beschrieben. Bei dieser ist eine zentrale Bremsprobeanlage vorgesehen, mit welcher Zusatzgeräte verbunden sind. Der Anschluss an die Schienenfahrzeuge erfolgt über die Zusatzgeräte. Damit können auch Schienenfahrzeuge, die entfernt zur zentralen Bremsenprobeanlage stehen, überprüft werden.

In der US 4 440 015 A wird eine Vorrichtung zur Überprüfung der Bremsfunktion einer Lokomotive beschrieben. Diese Vorrichtung weist einen externen Druckluftbehälter auf, der mit unterirdischen Leitungen verbunden ist. Diese unterirdischen Leitungen weisen über die Erdoberfläche ragende Anschlussteile auf, die mit der zu überprüfenden Lokomotive verbunden sind.

In der US 4 847 770 A wird eine automatisierte Anlage zum Prüfen der Bremsen eines Zuges ohne Lokomotive beschrieben. Hierbei wird eine Druckquelle an einem Ende des Zuges mit der Pressluftleitung verbunden. Die Messwerte werden über Funk an eine zentrale Datenverarbeitungsanlage übertragen, in der die Auswertung erfolgt.

Wird ein Zug von schienengeleiteten Fahrzeugen zusammengestellt, so erfolgt auch eine Überprüfung der Funktionsfähigkeit der Bremsen. Diese Überprüfung der Bremsen kann mit angeschlossenem Triebfahrzeug durchgeführt werden oder über ein eigenes Gerät, wobei die einzelnen Abläufe entweder händisch gesteuert werden können oder bereits durch ein selbsttätig ablaufendes Programm erfolgen. Derartige Anlagen werden als Bremsprobeanlagen bezeichnet und sind zwischen Gleisen im Rangierbereich angeordnet. Zur Sicherheit des Bedienungspersonals muss für die Anlage ein Mindestabstand zu den Gleisen vorgesehen sein. Diese Anlage ist eine Quelle für die Druckluft, welche über einen Schlauch in die Hauptleitung eines Wagens eingeleitet wird, wobei die Einleitung am Beginn oder Ende des Zuges erfolgt und die einzelnen Fahrzeuge über Druckluftschläuche verbunden sind und am Ende oder am Beginn des Zuges die Hauptleitung am Ausgang abgesperrt ist. Im Laufe der Überprüfung der Druckluftbremsen ist auch ein Lösevorgang für die Bremsen vorgesehen, so dass der Zug ungebremst am Gleis ist, und derselbe durch zusätzliche mechanische Mittel, z. B. mit einem Schienenschuh, arretiert werden muss. Erfolgt eine derartige zusätzliche Arretierung nicht oder nicht ausreichend, so kann der Zug, selbst bei einer geringfügigen Steigung, ins Rollen kommen. Der Zug ist über den Schlauch, dessen Länge maximal 25 m betragen darf, mit der Bremsprobeanlage verbunden, so dass es zu einer teilweisen Zerstörung der Bremsprobeanlage kommen kann, und gleichzeitig der Schlauch abgerissen wird. Der Schlauch selbst weist dann hohe kinetische Energie auf, womit die Bruchstücke des Schlauches, die einseitig nicht fixiert sind, unvorhersehbare Bewegungen durchführen, die eine Gefährdung des Bedienungspersonals bedingen. Bei zerstörtem Schlauch tritt jedoch zeitverzögert ein selbsttätiges Bremsen des Zuges ein.

Die Aufgabe der vorliegenden Erfindung besteht darin, eine Bremsprobeanlage zu schaffen, die durch einen wegrollenden zu prüfenden Zug über den den Zug und die Anlage verbindenden Schlauch nicht zerstört wird, weiters dass der Schlauch als solcher ebenfalls zerstörungsfrei bleibt, und dass eine Beeinträchtigung, insbesondere eine Gefährdung, des Bedienungspersonals durch den Schlauch verhindert werden kann.

Die erfindungsgemäße Vorrichtung zum Prüfen von pneumatisch mit einem Druckmedium betätigbaren Bremsen, z. B. Scheibenbremsen, die in schienengeleiteten Fahrzeugen angeordnet sind, und über eine im Fahrzeug angeordnete Leitung und eine extern zum Fahrzeug angeordnete zumindest teilweise flexible Leitung, z. B. Schlauch, das Druckmedium leitend mit einer extern zum Fahrzeug, und insbesondere ortsfest, angeordneten Quelle für das Druckmedium lösbar verbunden sind, besteht im Wesentlichen darin, dass die, zumindest teilweise flexible, Leitung mit einer, insbesondere ausschließlich, durch Zug oberhalb einer vorbestimmten Kraft, insbesondere zumindest 250 N, vorzugsweise zumindest 500 N, an derselben lösbaren Kupplung mit der Quelle, insbesondere nahe der Quelle, verbunden ist, und ein der Quelle naher Endbereich der zumindest teilweise flexiblen Leitung mit einem in einem Endbereich, und insbesondere ortsfest, nahe der Quelle festgelegten mechanischen, zumindest teilweise flexiblen, Verbindungsmittel, z. B. Seil, verbunden ist.

Durch wegrollende Fahrzeuge oder eines Verbandes derselben übt über die flexible Leitung einen Zug auf die Kupplung aus, so dass die Kupplung gelöst wird, womit eine Zerstörung der flexiblen Leitung als auch der Vorrichtung vermieden werden kann. Die Kraft für den Zug soll so groß sein, z. B. zumindest 250 N, insbesondere zumindest 500 N, dass eine unbeabsichtigte Trennung der lösbaren Kupplung, z. B. durch Stolpern einer Person an der flexiblen Leitung, vermieden wird. Durch das mechanische Verbindungsmittel kann das freie Ende der flexiblen Leitung in seiner Bewegung gelenkt werden, so dass ein vorgegebener Gefahrenbereich eingehalten werden kann, womit eine Gefährdung des Bedienungspersonals ausschließbar wird.

Weist die Kupplung zwei Teile mit, insbesondere zylinderförmigen, Flanschen auf, wobei ein Flansch einen weiteren Flansch für das Druckmedium dicht übergreift, und sind die Flansche lösbar miteinander verbunden, so liegt eine besonders betriebssichere lösbare Kupplung vor, die einerseits einen Verlust des Druckmediums und damit Abfall des Druckes in der Hauptleitung der Fahrzeuge verhindert, womit eine sichere Erprobung der Bremsen möglich ist, und andrerseits liegt eine besonders einfache und damit auch besonders präzis zu fertigende Konstruktion vor.

Weisen die Flansche jeweils zumindest eine, insbesondere drei, miteinander in ihrer Lage übereinstimmenden Ausnehmung/en, insbesondere Bohrung/en, auf, so kann eine mit Zug lösbare Kupplung besonders einfach erstellt werden. Es ist beispielsweise lediglich erforderlich, dass in einem Teil der Kupplung in den Ausnehmungen federbelastete Arretierkörper angeordnet sind, die mit einer Abrundung in die Ausnehmungen des anderen Teiles der Kupplung eingreifen, so dass bei Überschreiten einer bestimmten Zugkraft diese Körper mit der Kraft der Feder in die Ausnehmung nur eines Teiles der Kupplung gedrückt werden.

Reicht von zumindest einer Ausnehmung in einem Flansch in die Ausnehmung des weiteren Flansches ein Scherkörper, insbesondere ein zylindrischer Scherstift, so kann eine besonders sichere Verbindung der Teile der Kupplung erfolgen, wobei durch die Dimensionierung der Scherkörper eine sehr genaue Festlegung der Mindestkraft zur Trennung der Kupplungsteile möglich ist. Liegen zylindrische Stifte vor, so können dieselben besonders einfach eingesetzt werden. Nach erfolgter Trennung der Teile der Kupplung müssen lediglich Scherkörper eingesetzt werden, womit erneut eine funktionstüchtige Kupplung gegeben ist.

Ist die auf Zug lösbare Kupplung mit einer weiteren, insbesondere arretierbaren, das Medium leitenden Kupplung für die Verbindung der zumindest teilweise flexiblen Leitung mit der Quelle verbunden, so liegt einerseits eine Solltrennstelle, u. zw. die auf Zug lösbare Kupplung, als auch eine weitere Kupplung, die den üblichen Anschluss der flexiblen Leitung erlaubt, vor.

Ist die der Quelle nahe der auf Zug lösbare Kupplung um eine etwa vertikale Achse oder Welle, insbesondere um zumindest 180°, drehbar, so kann der Anschluss der flexiblen Leitung auch entlang des Gleises in entgegengesetzte Richtungen geschwenkt werden, wobei ein Knicken der flexiblen Leitung vermieden wird, da der Anschluss in eine entsprechende Winkellage gebracht und gleichzeitig ein sicherer Lösprozess bei der Kupplung verwirklich werden kann.

Ist das mechanische Verbindungsmittel mit der zumindest teilweise flexiblen Leitung lösbar verbunden, so kann je nach Länge des flexiblen mechanischen Verbindungsmittels nach Hemmung der Bewegung die flexible Leitung von dem rollenden Fahrzeug entlang des Gleises bewegt werden, so dass schlangenförmige Bewegungen der flexiblen Leitung vermieden sind.

Ist das mechanische zumindest teilweise flexible Verbindungsmittel auf einer drehbaren Trommel nahe der Quelle ortsfest aufgerollt und löst sich das Ende des Verbindungsmittels in der Trommel am zeitlichen Ende eines Abrollvorganges, wobei die Trommel gedreht wird, so ist eine besonders kompakte Konstruktion gewährleistet, da das Verbindungsmittel aufgerollt nur wenig Raum benötigt, und gleichzeitig wird verhindert, das mit der Bewegung der flexiblen Leitung das mechanische Verbindungsmittel in seiner Bewegung gehindert wird.

Ist eine Bremse für das Verbindungsmittel vorgesehen, so kann erreicht werden, dass bei nicht straff gespannter flexibler Leitung zwischen der Vorrichtung und dem Fahrzeug der Straffungsvorgang verlangsamt wird.

Ist die Bremse an der Trommel vorgesehen, so kann eine besonders einfache und betriebssichere Konstruktion gewählt werden.

Ist die Bremse mit zwei Scheiben gebildet, wobei eine drehfest angeordnet ist und vorzugsweise über eine Feder gegen die mit der Trommel mitdrehenden Scheibe drückbar ist, so kann eine besonders gute Bremswirkung erreicht werden, da die verzahnten Scheiben besonders groß ausgebildet werden können und über die Feder auch ein Anpressen der Scheibe mit besonders hoher Kraft erfolgen kann.

Im Folgenden wird die Erfindung anhand der Zeichnungen näher erläutert.

Es zeigen:
- Fig. 1: eine schematische Darstellung einer Druckluftbremsanlage eines Wagens,
- Fig. 2: die Anordnung einer Bremsprobeanlage zwischen Gleisen,
- Fig. 3: eine Bremsprobenanlage mit angeschlossener auf Zug lösbaren Kupplung mit Schlauch,
- Fig. 4: eine mit Zug lösbare Kupplung im Schnitt,
- Fig. 5 und 6: einen Ausschnitt einer auf Zug lösbaren Kupplung im Schnitt und
- Fig. 7: eine Trommel für ein Verbindungsmittel.

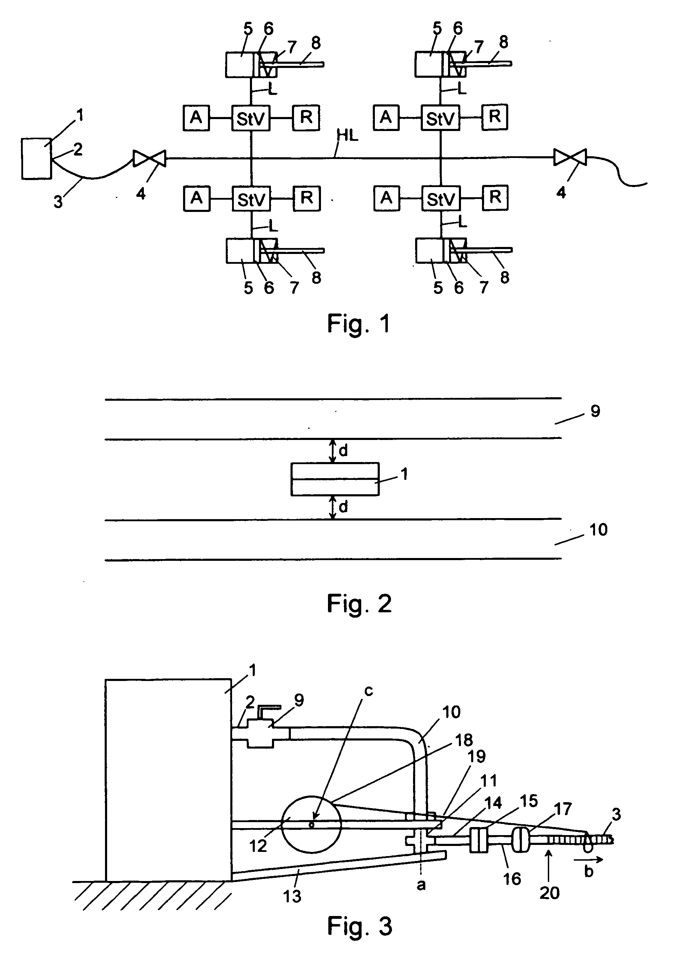

Die in Fig. 1 schematisch dargestellte Druckluftbremsanlage eines schienengeleiteten Fahrzeuge, z. B. Eisenbahnwagen, Wagen für Schnell- oder U-Bahnen, ist mit einer Vorrichtung 1 zum Prüfen der Bremse, im Folgengen kurz Bremsprobeanlage genannt, verbunden. Die Vorrichtung 1 weist einen Anschluss auf, der als Quelle 2 für das Druckmedium, in diesem Fall für die Druckluft, dient. Dieselbe ist über eine zumindest teilweise flexible Leitung, einem Schlauch 3 von 25 m Länge mit einem Innendurchmesser von 28,00 mm mit dem Ventil 4 des schienengebundenen Fahrzeuges verbunden. Anstelle eines Schlauches können auch andere, zumindest teilweise flexible, Leitungen 3 eingesetzt werden, wie beispielsweise Rohrstücke, die an ihren Endbereichen teilkugelförmige Ausnehmungen bzw. Köpfe aufweisen. Das Ventil 4 schließt oder öffnet die Hauptluftleitung HL. Mit der Hauptluftleitung HL sind vier pneumatische Systeme jeweils mit einem Steuerventil StV, einer Steuerkammer A, einem Reservoir R und über die Leitung L mit einem Zylinder 5, in welchem ein Kolben 6 mit Rückholfeder 7 angeordnet ist, verbunden. Über die Kolbenstange 8 wird die Bremse, also beispielsweise Scheibenbremse oder Backenbremse betätigt. Die Rückholfeder 7 dient dazu, dass im druckentlasteten Zustand des Zylinders 5 der Kolben 6 wieder in seine Ausgangslage bewegt wird. In der Regel wird ein Zug mit mehreren Wagen, die über eine Druckluftleitung verbunden sind, überprüft.

Das Verfahren, das durch direkte oder auch ferngesteuerte Betätigung der Vorrichtung zum Prüfen der Bremsen durchgeführt werden kann, weist folgende Schritte auf:
A Füllen des Zuges mit Druckluft:
   1. Der Zug wird gegen unbeabsichtigtes Entrollen gesichert.
   2. Bei dem Bremsprobegerät ist das Ventil zur Hauptluftleitung HL des rollenden Materials (Zug) geschlossen.
   3. Die Hauptluftleitung HL des Zuges ist an beiden Enden mit Ventilen 4 verschlossen. Die Ventile zwischen den einzelnen Wagen des Zuges sind geöffnet.
   4. Zum Herstellen der Druckluftverbindung zwischen der Bremsprobeanlage 1 und dem Zug wird das Ventil 4 der Hauptluftleitung HL des Zuges zur Bremsprobeanlage geöffnet.
   5. Das Ventil 9 von der Bremsprobeanlage 1 zur Hauptluftleitung HL wird geöffnet.
   6. Bremsprobeanlage 1 wird eingeschaltet und die Verbindung zur Druckluftquelle 2 geöffnet.
   7. Die Hauptluftleitung HL wird mit Druckluft mit einem Druck von 4,8 bar gefüllt und über einen Drucksensor gemessen.
   8. Der Füllvorgang wird über einen Strömungsmesser in der Bremsprobeanlage 1 überwacht und abgeschlossen.
B Dichtigkeitsprüfung:
   9. Bei einer unteren Strömungsgeschwindigkeit kann die Dichtigkeitsprüfung durch Betätigung eines Schalters "Dichtigkeit" eingeleitet werden und es wird die Verbindung der Bremsprobeanlage 1 mit der Druckluftquelle 2 unterbrochen.
   10. Es wird der Druckabfall gemessen. Dieser soll weniger als 0,5 bar in 60 Sekunden betragen.
   11. Wenn die Dichtigkeit nicht gegeben ist, wird das Programm gestoppt und es kann das Programm nur weiter durchgeführt werden, wenn die Dichtigkeit gegeben ist.
   12. Eine Dichtigkeitsprüfung ist bei geschlossenem Hahn 9 an der Bremsprobeanlage zur Hauptluftleitung nicht möglich.
C Anlegen der Bremsen:
   13. Die Verbindung zwischen der Bremsprobeanlage 1 und der Druckluftquelle 2 wird geöffnet.
   14. Der Druck in der Hauptluftleitung HL wird auf 4,9 bar eingestellt.
   15. Der Druck in der Hauptluftleitung HL wird auf 4,2 bar gesenkt, damit legen die Backenbremsen oder Scheibenbremsen an. Durch Absenken des Druckes in der Hauptluftleitung HL wird über das Steuerventil StV Druckluft aus dem Reservoir R (4,9 bar) dem Zylinder 5 zugeleitet (Betriebsbremsung). Der Druck in der Steuerkammer A verbleibt auf 4,9 bar.
   16. Der Zug muss von einer Person abgegangen werden, um zu überprüfen, ob alle eingeschalteten Bremsen angelegt sind.
   17. Keine Dichtigkeitsprüfung bei angelegten Bremsen.
D Lösen der Bremsen:
   18. Durch Betätigung des Schalters "Bremsen lösen" wird der Lösevorgang eingeleitet.
   19. Der Druck in der Hauptluftleitung HL wird auf 5,05 bar eingestellt.
   20. Über das Steuerventil StV wird der Zylinder 5 gelüftet, womit die Bremsen lösen.
   21. Der Zug muß von einer Person abgegangen werden, um zu überprüfen, ob alle Bremsen gelöst sind.
   22. Eine Schnellbremsung mit Absenkung des Druckes in der Hauptleitung auf 0 bar Überdruck wird erst vor der Zugabfahrt durchgeführt.
E Angleichen:
   23. Ein Angleichen des Druckes bei gelösten Bremsen wird nur dann durchgeführt, wenn einzelne Bremsen nicht gelöst haben. Es wird die Hauptluftleitung HL auf 5,4 bar gefüllt und langsam auf 4,9 bar gesenkt. (Das Absenken des Druckes ist ebenfalls automatisiert).
      Wenn nur eine Bremse nicht gelöst hat, wird der Lösezug betätigt. Der Druck in der Steuerkammer A und dem Reservoir R wird auf den Druck der Hauptluftleitung HL eingestellt.

In Fig. 2 sind zwei Gleise 9, 10 dargestellt. Die Vorrichtung 1 zum Prüfen weist, bezogen auf ihre Mitte, einen Abstand d von 140,00 cm zu den Gleisen 9, 10.

In Fig. 3 weist die Vorrichtung 1 zum Prüfen der Bremsen einen Auslass auf, der als Quelle 2 für das Druckmedium dient. Diese Quelle 2 mündet in ein Ventil 9, mit dem die Verbindung der Quelle 2 für das Druckmedium mit der Hauptleitung HL des Wagens verwirklicht werden kann. Dieses Ventil 9 mündet über eine Leitung 10, die an ihrem unteren Ende senkrecht gewinkelt ist, in einen Drehkörper 11, welcher in nicht dargestellten Lagern in der Stützen 12, 13 um die Welle a um 360° drehbar ist. Die Drehbewegung wird lediglich durch die über die starre Leitung 14, die mit der auf Zug lösbaren Kupplung 15 verbunden ist, beschränkt. Die Kupplung 15 ist ihrerseits über ein Rohrstück 16 über eine arretierbare Kupplung 17 mit dem Schlauch 3 verbunden. Die arretierbare Kupplung wird durch eine Drehbewegung des am Ende des Schlauches 3 angeordneten Kupplungsteils verschlossen. Bei Ausübung eines Zuges über eine vorbestimmte Kraft wird, z. B. zumindest 750 N, von dem Schlauch 3 in Richtung des Pfeiles b die Kupplung 15 gelöst. Auf der Stütze 12 ist eine Trommel 18 gelagert, auf welcher ein Seil 19 aufgerollt ist, das mit dem der Quelle 2 nahen Ende 20 verbunden ist.

Rollt nun ein Wagen unbeabsichtigt von der Vorrichtung zum Prüfen ab, so wird vorerst die Kupplung 15 gelöst, da ein Zug oberhalb einer vorbestimmten Kraft in Richtung des Pfeiles b erfolgt, und das der Druckquelle 2 nahe Ende des Schlauches von einem mechanischen flexiblen Verbindungsmittel, u. zw. einem Seil 19, in begrenzter Bewegung gehalten. Als mechanisches, zumindest teilweise flexibles, Verbindungsmittel kann ein Draht, ein Metallband od. dgl. dienen. Mit Ablösen des Schlauches von der Quelle 2 tritt eine Bremsung des Wagens in der Regel innerhalb von 5 m ein. Der Schlauch bewirkt über das Seil 19 ein Abrollen desselben von der Trommel 18, die sich um die Achse des Gehäuses c bewegt. Eine Welle könnte ebenfalls vorgesehen sein.

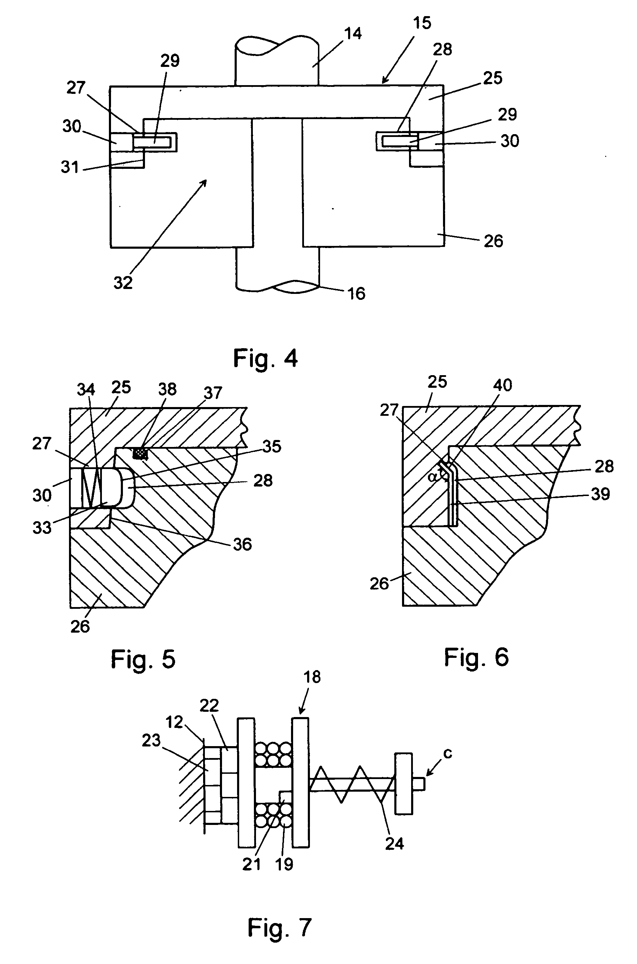

Wie aus Fig. 7 ersichtlich, ist das Seil 19 auf der Trommel 18 aufgerollt und weist eine nicht dargestellte Schlaufe auf, die in einen Haken 21 der Trommel, die um die Achse drehbar ist, einhakt. Mit vollständigem Abrollen des Seiles 19 gleitet das Ende mit der Schlaufe aus dem Haken 21. Um die Bewegung des Schlauches 3, beispielsweise im Vorgang des Straffens der Verbindung zwischen der Quelle und dem schienengebundenen Fahrzeuge zu verlangsamen, ist eine Bremse vorgesehen, wobei eine verzahnte Scheibe 22 mit der Trommel 18 lösbar und drehfest verbunden ist, und die weitere verzahnte Scheibe 23 lösbar und drehfest mit dem Gehäuse c verbunden ist, und von der Feder 24 gegen die Scheibe 22 gedrückt wird, so dass der Abrollvorgang verlangsamt wird. Wesentlich ist, dass das eine Ende des flexiblen Verbindungsmittels 19 in Nähe der Quelle, also der Bremsprobenanlage 1, wie dargestellt, auf dem Gehäuse derselben gehalten ist.

In Fig. 4 ist eine durch Zug in Richtung des Pfeiles b lösbare Kupplung mit zwei Flanschen 25 und 26 dargestellt. Der Flansch 25 ist mit der starren Leitung 14 verbunden und verbleibt an derselben, welche über den Drehkörper 11 mit der Vorrichtung zum Prüfen 1 verbunden ist, wohingegen der Flansch 26 über die arretierbare Kupplung 17 mit dem Schlauch 3 verbunden ist, und bei einem Lösvorgang, also wenn der Zug in Richtung des Pfeiles b rollt, verbleibt der Flansch 26 mit dem Schlauch 3 verbunden. Sowohl der Flansch 25 als auch der Flansch 26 weisen Ausnehmungen 27 und 28, u. zw. Bohrungen, auf, in welchen zylindrische Scherstifte 29 angeordnet sind. Die Scherstifte 29 reichen von der Ausnehmung 27 in die Ausnehmung 28 und sind dort über Imbusschrauben 30 in ihrer Lage gehalten. Um den Umfang der Flansche verteilt sind jeweils drei bis vier Ausnehmungen 27, 28 vorgesehen. Bei Lösen der beiden Flansche 25 und 26 werden die zylindrischen Scherstifte 29 abgebrochen. Bei erneuter Montage der Kupplung 15 müssen die Imbusschrauben 30 gelöst, die Teilstücke der zerstörten Scherstifte entnommen, die beiden Flansche wieder ineinander geschoben, die Scherstifte 29 eingesetzt und sodann über die Imbusschrauben lagefixiert werden. Der Flansch 25 weist eine innere zylinderförmige Dichtfläche 31 auf, die den zylinderförmigen Fortsatz 32 des Flansches 26 umgreift. Die Abdichtung zwischen den beiden Flanschen erfolgt über diese zylinderförmigen Flächen.

Bei dem Ausschnitt einer durch Zug lösbaren Kupplung in Fig. 5 ist anstelle der Scherstifte ein Arretierkörper 33 vorgesehen, der von der Ausnehmung 27 in dem Flansch 25 der Ausnehmung 28 des Flansches 26 reicht. Der Arretierkörper 33 wird durch eine Feder 34 in seiner Lage gehalten. Beim Zug an dem Flansch 26 wird der Arretierkörper über die Rundung 35 desselben aus der Ausnehmung 28 in die Ausnehmung 27 gedrückt, so dass ein Lösen der beiden Flasche 25 und 26 voneinander erfolgen kann. Zusätzlich zu den kegelförmigen Dichtflächen 36, die sowohl am Flansch 25 und Flansch 26 vorgesehen sind, weist der Flansch 26 eine ringförmige Nut 37 auf, in welcher ein O-Ring 38 zur weiteren Abdichtung vorgesehen ist. Der O-Ring kann auch alleinig die Abdichtung zwischen den Flanschen 25, 26 gewährleisten.

In Fig. 6 ist eine weitere lösbare Verbindung zwischen den Flanschen 25 und 26 dargestellt. Hierbei ist in einer Ausnehmung 28 eine Blattfeder 39 angeordnet, die an einem Ende 40 hakenförmig gebogen ist, wobei dasselbe in eine Ausnehmung 27 des Flansches 25 eingreift. Zur Lösung der Verbindung zwischen den beiden Flanschen 25, 26 rückt die Blattfeder 39 aus der Ausnehmung 27, da das Ende 40 nicht senkrecht zum weiteren Teil der Blattfeder 39 abgewinkelt ist, sondern einen Winkel α von 120° einschließt, sodass bei einem Zug in Richtung b dieses Ende aus der Ausnehmung 27 gleitet und zur Gänze in der Ausnehmung 28 aufgenommen wird. Beim Zusammenfügen der beiden Kupplungsteile 26 und 27 ist es lediglich erforderlich, dass diese ineinander geschoben werden, und die Federn zur Gänze in die Ausnehmung 28 des Flansches 26 gedrückt sind.

## Patentansprüche

1. Vorrichtung zum Prüfen von pneumatisch mit einem Druckmedium betätigbaren Bremsen, die in schienengeleiteten Fahrzeugen angeordnet sind, wobei die Vorrichtung eine extern zum Fahrzeug anzuordnende zumindest teilweise flexible das Druckmedium leitende Leitung (3) aufweist, weiters eine extern zum Fahrzeug anzuordnende Quelle (2) für das Druckmedium aufweist, und wobei die Bremsen über eine im Fahrzeug angeordnete Leitung und über die extern zu Fahrzeug angeordnete und zumindest teilweise flexible Leitung mit der Quelle (2) für das Druckmedium lösbar verbindbar sind **dadurch gekennzeichnet, dass** die extern zum Fahrzeug anzuordnende, zumindest teilweise flexible, das Druckmedium leitende Leitung (3) über eine lösbare Kupplung (15) mit der Quelle (2) verbindbar ist, wobei die lösbare Kupplung durch Zug oberhalb einer vorbestimmten Kraft an derselben lösbar ist, und wobei die Vorrichtung ein nahe der Quelle (2) festgelegtes mechanisches, zumindest teilweise flexibles Verbindungsmittel (19) aufweist, mit dem ein der Quelle (2) naher Endbereich (20) der zumindest teilweise flexiblen Leitung (3) verbunden ist.

2. Vorrichtung nach Anspruch 1, **dadurch gekennzeichnet, dass** die vorbestimmte Zugkraft zumindest 250 N, vorzugsweise zumindest 500 N beträgt.

3. Vorrichtung nach Anspruch 1 oder 2, **dadurch gekennzeichnet, dass** die Kupplung (15) zwei Teile mit, insbesondere zylinderförmigen, Flanschen (25, 26) aufweist, wobei ein Flansch (25) einen weiteren Flansch (26) für das Druckmedium dicht übergreift, und die Flansche (25, 26) lösbar miteinander verbunden sind.

4. Vorrichtung nach Anspruch 3, **dadurch gekennzeichnet, dass** die Flansche (25, 26) jeweils zumindest eine, insbesondere zumindest drei, miteinander in ihrer Lage übereinstimmende Ausnehmung/en (27, 28), insbesondere Bohrung/en, aufweist/aufweisen.

5. Vorrichtung nach Anspruch 4, **dadurch gekennzeichnet, dass** von zumindest einer Ausnehmung (27) in einem Flansch (25) in die Ausnehmung (28) des weiteren Flansches (26) ein Scherkörper, insbesondere zylindrischer Scherstift (29), reicht.

6. Vorrichtung nach einem der Ansprüche 1 bis 5, **dadurch gekennzeichnet, dass** die auf Zug lösbare Kupplung (15) mit einer weiteren, insbesondere arretierbaren, das Druckmedium leitende Kupplung (17) für die Verbindung der zumindest teilweise flexiblen Leitung (3) mit der Quelle (2) verbunden ist.

7. Vorrichtung nach einem der Ansprüche 1 bis 6, **dadurch gekennzeichnet, dass** die der Quelle (2) nahe auf Zug lösbare Kupplung (15) um eine etwa vertikale Achse (a) oder Welle, insbesondere zumindest um 180°, drehbar ist.

8. Vorrichtung nach einem der Ansprüche 1 bis 7, **dadurch gekennzeichnet, dass** das mechanische Verbindungsmittel (19) mit der zumindest teilweise flexiblen Leitung (3) lösbar verbunden ist.

9. Vorrichtung nach einem der Ansprüche 1 bis 8, **dadurch gekennzeichnet, dass** das mechanische, zumindest teilweise flexible, Verbindungsmittel (19) auf einer Trommel (18) nahe der Quelle (2) ortsfest aufgerollt ist, und sich das Ende des Verbindungsmittels in der Trommel (18) am zeitlichen Ende eines Abrollvorganges von der Trommel (18) löst.

10. Vorrichtung nach einem der Ansprüche 1 bis 9, **dadurch gekennzeichnet, dass** eine Bremse für das Verbindungsmittel (19) vorgesehen ist.

11. Vorrichtung nach Anspruch 10, **dadurch gekennzeichnet, dass** die Bremse an der Trommel (18) vorgesehen ist.

12. Vorrichtung nach Anspruch 11, **dadurch gekennzeichnet, dass** die Bremse mit zwei, insbesondere verzahnten, Scheiben (22, 23) gebildet ist, wobei eine drehfest angeordnet ist und vorzugsweise über eine Feder (24) gegen die mit der Trommel (18) drehfest verbundene Scheibe (23) drückbar ist.

## Claims

1. Device for testing brakes, pneumatically operated with a pressure medium, that are mounted in rail-guided vehicles, wherein the device has at least one partially flexible line (3), carrying the pressure medium, to be positioned externally to the vehicle, further a source (2) for the pressure medium, to be positioned externally to the vehicle, and wherein the brakes can be releasably connected by means of a line positioned in the vehicle and the at least partially flexible line positioned external to the vehicle to the source (2) for the pressure medium, **characterised in that** the at least partially flexible line (3), to be positioned externally to the vehicle, carrying the pressure medium, can be connected by means of a releasable coupling (15) to the source (2), whereby the releasable coupling can be detached from the same by tractive stress with a force above a predetermined level, and wherein the device comprises a mechanical, at least partially flexible connecting means (19), fixed near the source (2), with which an end portion(20) near the source (2) of the at least partially flexible line (3) is connected.

2. Device in accordance with claim 1, **characterised in that** the predetermined tractive force is at least 250 N, preferably at least 500 N.

3. Device in accordance with claim 1 or 2, **characterised in that** the coupling (15) comprises two parts with, in particular cylindrical, flanges (25, 26), wherein one flange (25) closely engages over a further flange (26) for the pressure medium, and the flanges (25, 26) are releasably connected together.

4. Device in accordance with claim 3, **characterised in that** the flanges (25, 26) each has/have at least one, in particular, at least three, opening(s) (27, 28), coincident in their position, in particular hole(s).

5. Device in accordance with claim 4, **characterised in that** a shear body, in particular cylindrical shear pin (29), extends from at least one opening (27) in a flange (25) into the opening (28) of the further flange (26).

6. Device in accordance with one of the claims. 1 to 5, **characterised in that** the coupling (15) releasable by tractive force is connected to a further, lockable coupling (17), carrying the pressure medium, for connecting the at least partially flexible line (3) to the source (2).

7. Device in accordance with one of the claims 1 to 6, **characterised in that** the coupling (15) releasable by tractive force, near to the source, can be turned about an approximately vertical axis (a) or shaft,, in particular at least through 180°.

8. Device in accordance with one of the claims 1 to 7, **characterised in that** the mechanical connecting means (19) is releasably connected to the at least partially flexible line (3).

9. Device in accordance with one of the claims 1 to 8, **characterised in that** the mechanical, at least partially flexible, connecting means (19) is coiled fixedly on a drum (18), near to the source (2), and the end of the connecting means disengages in the drum at the time when the process of uncoiling from the drum (18) comes to an end.

10. Device in accordance with one of the claims 1 to 9, **characterised in that** a brake is provided for the connecting means (19).

11. Device in accordance with claim 10, **characterised in that** the brake is provided on the drum (18).

12. Device in accordance with claim 11, **characterised in that** the brake is formed with two, in particular toothed, discs (22, 23), wherein one is positioned non-rotatably and preferably can be pressed by means of a spring (24) against the disc (23) attached to the drum (18).

## Revendications

1. Dispositif de vérification de freins pouvant être actionnés par voie pneumatique avec un fluide sous pression, disposés dans des véhicules sur rails, le dispositif présentant une conduite (3) qui achemine le fluide sous pression, est au moins en partie flexible et doit être disposée à l'extérieur du véhicule, et en outre une source (2), qui doit être disposée à l'extérieur du véhicule, pour le fluide sous pression, et les freins pouvant être reliés de manière détachable à la source (2) pour le fluide sous pression par le biais d'une conduite disposée dans le véhicule et par le biais de la conduite qui est au moins en partie flexible et disposée à l'extérieur du véhicule, **caractérisé en ce que** la conduite (3) qui achemine le fluide sous pression est au moins en partie flexible et doit être disposée à l'extérieur du véhicule peut être reliée par le biais d'un couplage amovible (15) à la source (2), le couplage amovible pouvant être détaché par traction au-dessus d'une force prédéterminée appliquée sur celui-ci, et le dispositif présentant un moyen de liaison (19) mécanique au moins en partie flexible, fixé près de la source (2), auquel est reliée une zone d'extrémité (20) située près de la source (2) de la conduite (3) qui est au moins en partie flexible.

2. Dispositif selon la revendication 1, **caractérisé en ce que** la force de traction prédéterminée s'élève au moins à 250 N, de préférence au moins à 500 N.

3. Dispositif selon la revendication 1 ou 2, **caractérisé en ce que** le couplage (15) présente deux parties avec des brides (25, 26) en particulier cylindriques, une bride (25) recouvrant de manière étanche une autre bride (26) pour le fluide sous pression, et les brides (25, 26) étant reliées l'une à l'autre de manière détachable.

4. Dispositif selon la revendication 3, **caractérisé en ce que** les brides (25, 26) présentent respectivement au moins un, en particulier au moins trois, évidements (27, 28), en particulier des perçages, dont les positions coïncident.

5. Dispositif selon la revendication 4, **caractérisé en ce qu'**un corps de cisaillement, en particulier une goupille de cisaillement (29) cylindrique, s'étend d'au moins un évidement (27) d'une bride (25) jusque dans l'évidement (28) de l'autre bride (26).

6. Dispositif selon l'une quelconque des revendications 1 à 5, **caractérisé en ce que** le couplage (15) détachable par traction est relié à un autre couplage, (17) qui achemine le fluide sous pression et est en particulier blocable, pour la liaison à la source (2) de la conduite (3) qui est au moins en partie flexible.

7. Dispositif selon l'une quelconque des revendications 1 à 6, **caractérisé en ce que** le couplage (15) détachable par traction, situé près de la source (2), peut tourner autour d'un axe (a) ou arbre à peu près vertical, en particulier d'au moins 180°.

8. Dispositif selon l'une quelconque des revendications 1 à 7, **caractérisé en ce que** le moyen de liaison (19) mécanique est relié de manière détachable à la conduite (3) qui est au moins en partie flexible.

9. Dispositif selon l'une quelconque des revendications 1 à 8, **caractérisé en ce que** le moyen de liaison (19) mécanique qui est au moins en partie flexible est enroulé fixement sur un tambour (18) près de la source (2) et l'extrémité du moyen de liaison dans le tambour (18) se détache du tambour (18) à la fin d'un processus de déroulement.

10. Dispositif selon l'une quelconque des revendications 1 à 9, **caractérisé en ce qu'**un frein pour le moyen de liaison (19) est prévu.

11. Dispositif selon la revendication 10, **caractérisé en ce que** le frein est prévu sur le tambour (18).

12. Dispositif selon la revendication 11, **caractérisé en ce que** le frein est formé de deux disques (22, 23), en particulier dentés, l'un étant disposé de manière à ne pas pouvoir tourner et pouvant de préférence être pressé par le biais d'un ressort (24) contre le disque (23) relié, sans pouvoir tourner, au tambour (18).
